# EUROPEAN PATENT APPLICATION

(11) **EP 1 659 090 A1**
(43) Date of publication of application: **24.05.2006**
(21) Application number: 04106015.3
(22) Date of filing: 23.11.2004
(51) Int. Cl.: B67B 7/18, G01B 11/10

(54) **Method and apparatus for detecting caps on test tubes**

(71) Applicant: Kordia B.V., 2312 RG LEIDEN (NL)
(72) Inventor: Postma, Erik, 2611 LG, DELFT (NL)
(74) Representative: Aalbers, Arnt Reinier

(57) **Abstract**

The invention pertains to a device (1) for removing caps (26) from test tubes (25) comprising a first set of grippers (7) for gripping a tube (25), a second set of grippers (8) for gripping a cap (26), and at least one drive (11) for rotating and/or translating the first and second grippers (7, 8) relative to each other. The device (1) further comprises a sensor (22) for measuring, over at least part of the length of both the tube (25) and the cap (26), the contour of the tube (25) and the cap (26) or a parameter representing this contour. The device according to the invention allows a relatively straightforward configuration and identifies caps in a relatively robust manner.

## Description

The invention pertains to a device for removing caps from test tubes comprising a first set of grippers for gripping a tube, a second set of grippers for gripping a cap, and at least one drive for rotating and/or translating the first and second grippers relative to each other. The invention also relates to a method for detecting caps on test tubes comprising the steps of gripping a tube and moving the tube and, if present, the cap along a trajectory and past a sensor.

Such a device and method are known, e.g. from European patent application 0 972 744. In this document, it is explained that analytical instruments should be as versatile as possible to minimize the number of different analytical instruments required in a single location, such as at a hospital or laboratory. It is therefore desirable to have an analytical instrument that handles test tubes of various types and sizes and both open ("uncapped") and closed ("capped") test tubes. Where the instrument requires the test tubes to be open before they are pretreated, sampled and tested, the instrument should have an automatic decapper to automatically decap closed test tubes.

It is further explained that automating the decapping of test tubes is complicated by the variety of available test tubes, which may vary in diameter, height, and especially the variety of available caps to cover the test tubes. Some caps unscrew from threading on the top of the test tubes, another type of cap is a rubber stopper inserted into a test tube, which is removed by a pulling motion. The caps may also differ in their composition - they may be rubber, plastic, etc. A single decapper that can decap all of these tubes is needed because it is impractical to provide separate decappers in a single instrument for each type of cap.

The device shown in EP 0 972 744 is provided with two parallel sensors 172, 174 ("cap sensors"), each comprising a transmitter 172a, 174a and a receiver 172b, 174b. "Transmitter 172a is aligned to transmit a beam diagonally through the center of the axis centered within pads 120, 122B to detect caps with a raised central portion. If the test tube is capped, the cap will block the beam of sensor 172. If it is not capped, the beam will pass from transmitter 172a to receiver 172b uninterrupted. Sensor 174 is positioned approximately 6 mm away from sensor 172 and is used to detect a cap with a raised portion that is not centered on the cap. The cap information from sensors 172 and 174 is used to determine the type of cap and how many times the rotatable assembly 100 must be rotated to raise the cap within upper grippers 22. Sensors 170, 174 will also detect whether a test tube without a cap was inserted into the decapper by mistake so that the uncapped test tube is not crushed by jaws 40-42 as they close to grip a cap of a test tube during the decapping process."

It is an object of the present invention to provide an improved decapper, in particular one which allows a relatively straightforward configuration and/or which can identify more types of caps and/or identify caps relatively robustly.

To this end, the device according to the present invention is characterized in that the device further comprises a sensor for measuring, over at least part of the length of both the tube and the cap, the contour of the tube and the cap or a parameter representing this contour.

By detecting the contour of the tube and cap (or a parameter representing this contour), in particular at the transition from the cap (usually its lower rim) to the tube, the presence or absence of a cap can be robustly detected substantially independent of the type of cap present on the tube.

The sensor can either be of limited width, e.g. such that the sensor measures the contour of one side of the tube and cap, or have a width which exceeds the width of both the tubes and the caps for which the device is intended. Typically, the sensor has a width of at least 1 cm, preferably at least 2 cm and preferably less than 5 cm.

It is further preferred that the device comprises an emitter for emitting electromagnetic radiation towards the sensor and that the emitter and the sensor are positioned on opposite sides of the trajectory.

The invention also pertains to a method for detecting caps on test tubes characterised by measuring over at least part of the length of both the tube and, if present, the cap, the contour of the tube and the cap or a parameter representing this contour and establishing, based on the measured contour or parameter, whether or not a cap is present.

Within the framework of the present description and claims the word "cap" is defined as any closure for sealing a test tube, i.e. this word includes stoppers and the like.

The invention will now be explained in more detail with reference to drawings, which schematically depict a preferred embodiment.
Figure 1 is a front view of a decapper in accordance with the present invention.
Figures 2 and 3 are respectively front and rear views of the decapper shown in Figure 1, with the cover removed.
Figures 4A to 4C show the internals of the present decapper prior to the gripping of a tube.
Figures 5A to 5C show the internals of the present decapper during the gripping of a tube.

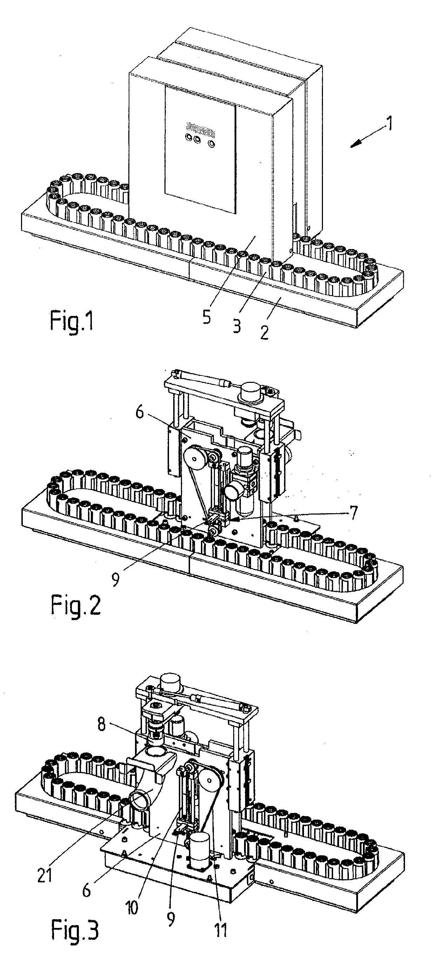

Figure 1 shows a decapper 1 according to the present invention comprising a machine bed 2 supporting an endless chain of receptacles 3 for various types of test tubes and a gripper assembly, hidden from view by a cover 5.

Figures 2 and 3 show the decapper 1 with the cover 5 removed, thus revealing a substantially vertical frame 6 supporting a first set of grippers 7 for gripping a tube, and a second set of grippers 8 for gripping a cap on a tube.

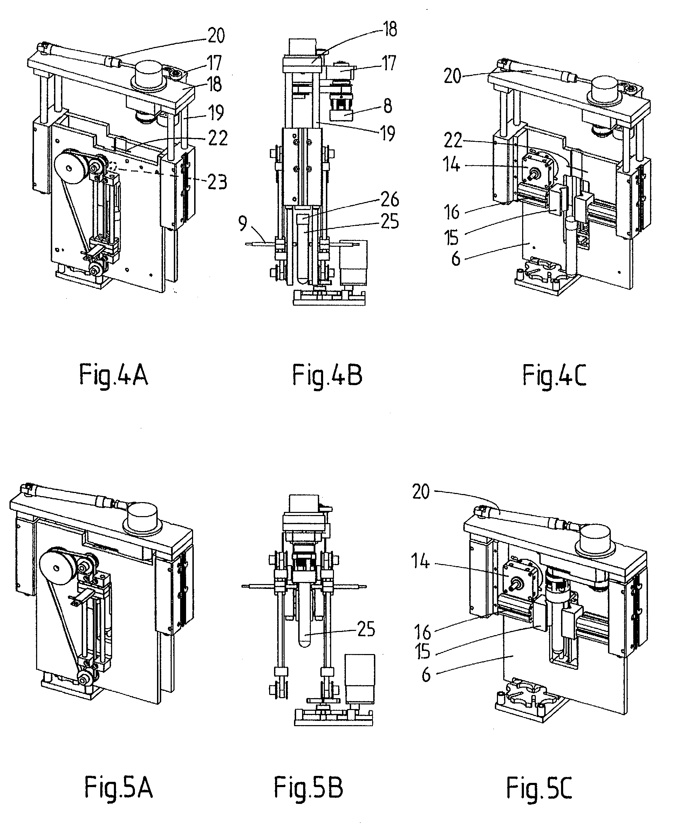

The first set of grippers 7 comprises two pneumatic cylinders 9 of rectangular cross-section, each having on its end facing the endless chain (or, when present, the test tubes) a V-shaped recess (shown in Figure 5C) for gripping a tube. Each of the pneumatic cylinders 9 can be moved horizontally, from a retracted position to a gripping position, and vertically along guides 10 by means of an assembly 11 comprising a clamp for holding the respective cylinder 9, a belt, pulleys and an electric motor 14 (shown in Figures 4C and 5C), from a lower position (Figures 4A - 4C) for gripping a tube from a receptacle 3 positioned in between the plates 9 to a upper position (Figures 5A - 5C) for actually decapping the tube. The first set of grippers 7 further comprises two V-blocks 15, each having, in a side wall facing the opposite block, a V-shaped recess (again shown in Figure 4C) for firmly holding a tube and each mounted on a (horizontal) pneumatic cylinder 16.

The second set of grippers 8 is mounted on an arm 17, which is pivotably mounted on a substantially horizontal subframe 18, which in turn is mounted on the substantially vertical frame 6 by means of vertical pneumatic cylinders 19. The arm 17 can be pivoted, by means of a further pneumatic cylinder 20, connected to both the subframe 18 and the arm 17, between an extended position (shown in Figs. 4A - 4C), wherein the grippers 8 are located over the inlet opening of a duct 21 for discharging removed caps and a retracted position (shown in Figs. 5A - 5C), wherein the grippers 8 are located over the endless chain of receptacles 3.

The decapper 1 further comprises a sensor 22, e.g. an array of photo-diodes ex Silonex, located on an inner wall of the substantially vertical frame 6, preferably just above the upper position of one of the pneumatic cylinders 9, i.e. beside the vertical trajectory of the test tubes that are to be decapped and in between the two sets of grippers 7, 8. An infrared LED 23 (indicated by a dotted circle in Fig. 4A) is located opposite the sensor 22, i.e. on the opposite inner wall just above the upper position of other of the pneumatic cylinders 9.

During operation, various test tubes 25 from which the caps 26 are to be removed are placed in the receptacles 3. Upon starting the decapper 1, the endless chain of receptacles 3 is forwarded one position at a time until a receptacle 3 containing a test tube 25 reaches the position in between the lower grippers 7, more specifically in between the two pneumatic cylinders 9 (Figs. 4A - 4C). These cylinders 9 are moved inwards, thus gripping the tube 25, and upwards between the V-blocks 15. By moving these blocks 15 inwards, the tube 25 is firmly gripped, preventing rotation of the tube 25 during later decapping.

During upward movement, the tube 25 and the cap 26 pass in between the sensor 22 and the emitter 23, and consequently block the light coming from the emitter, casting a shadow on the sensor 22. As the cap 25 has a larger diameter than the tube, the current outputted by the sensor 22 varies with the width of this shadow, i.e. the amount of light that is being blocked, and will exhibit a relatively sharp increase, when the lower rim of the cap passes the sensor 22. With this sharp increase, it is established that a cap is in fact present.

If some of the tubes are provided with stoppers, which typically have a smaller diameter than the tube, the amount of light that is being blocked will exhibit a relatively sharp decrease at the transition from the stopper to the tube, which provides a clear indication that a stopper is present.

Upon establishing that a cap 26 is present, the arm 17 is retracted and the horizontal, subframe 18 is lowered until the cap 26 on the tube 25 is engaged by the upper grippers 8, which are then rotated in counter-clockwise (CCW) direction, thus gripping and unscrewing the cap 26. It is preferred that the substantially horizontal subframe 18 is simultaneously moved upwards thus also pulling off the cap 26. Upon removing the cap 26, the arm 17 is rotated outwardly until the grippers 8 are located over the inlet opening of the duct 21 and, at that point, the grippers 8 are rotated clockwise, thus releasing the cap 26, which then falls into the duct 21 and is discharged.

If no cap is 26 present, the tube 25 will simply be returned to its receptacle 3.

As will be clear from this example, the preferred decapper is of a relatively straightforward configuration, is able to identify more types of caps and is able to identify caps in a relatively robust manner.

The invention is not restricted to the above-described embodiments and can be varied in a number of ways within the scope of the claims. For instance, although the sensor described above provides only a single parameter representing the contour, i.e. the total amount of light that is being blocked, it is also possible to employ a sensor which provides more detailed information, such as an array of pixels, each individually connected to a processing unit, which, while the cap and tube pass the sensor, continuously stores the information received from the pixels and thus effectively obtains a two-dimensional image of (at least part of) the cap and the tube. Based in this image, it can be established whether or not a cap is present, e.g. by using sharp transitions as a trigger or by comparing the image to images of known caps stored in a memory connected to or integrated in the processing unit.

## Claims

1. Device (1) for removing caps (26) from test tubes (25) comprising a first set of grippers (7) for gripping a tube (25), a second set of grippers (8) for gripping a cap (26), and at least one drive (11) for rotating and/or translating the first and second grippers (7, 8) relative to each other, **characterized in that** the device (1) further comprises a sensor (22) for measuring, over at least part of the length of both the tube (25) and the cap (26), the contour of the tube (25) and the cap (26) or a parameter representing this contour.

2. Device (1) according to claim 1, comprising a drive (11) for translating the first and second grippers (7, 8) relative to each other along a trajectory, wherein the sensor (22) is positioned beside the trajectory and in between the sets of grippers (7, 8).

3. Device (1) according to claim 1 or 2, wherein the sensor (22) has a width, such that the sensor (22) will measure the contour of one side of the tube (25) and the cap (26).

4. Device (1) according to any one of the preceding claims, wherein the sensor (22) has a width of at least 1 cm and preferably less than 5 cm.

5. Device (1) according to any one of the preceding claims, comprising an emitter (23) for emitting electromagnetic radiation towards the sensor (22), the emitter (23) and the sensor (22) being positioned on opposite sides of the trajectory.

6. Device (1) according to any one of the preceding claims, wherein the sensor comprises an array of photo-diodes (22) or a light-sensitive resistor.

7. Method for detecting caps (26) on test tubes (25) comprising the steps of gripping a tube (25) and moving the tube (25) along a trajectory and past a sensor (22),
**characterised by** measuring, over at least part of the length of both the tube (25) and, if present, the cap (26), the contour of the tube (25) and the cap (26) or a parameter representing this contour and establishing, based on the measured contour or parameter, whether or not a cap (26) is present.

8. Method according to claim 7, comprising the step of measuring the contour or a parameter representing this contour at the transition between the lower part of the cap (26) on the one hand and the tube (25) on the other and establishing, based on the measured contour or parameter at this transition, whether or not a cap (26) is present.

9. Method according to claim 7 or 8, comprising the steps of
providing a device (1) for removing caps (26) from test tubes (25) comprising a first set of grippers (7) for gripping a tube, a second set of grippers (8) for gripping a cap, and at least one drive (11) for rotating and/or translating the first and second grippers (7, 8) relative to each other, a sensor (23) for measuring, over at least part of the length of both the tube (25) and the cap (26), the contour of the tube (25) and the cap (26) or a parameter representing this contour,
emitting electromagnetic radiation towards the sensor (22),
gripping a tube (25) with the first set of grippers (7), and
translating the tube (25) towards the second grippers (8) and past sensor (22), thus blocking radiation emitted towards the sensor (22).
